# EUROPEAN PATENT APPLICATION

(11) **EP 4 243 255 A1**
(43) Date of publication of application: **13.09.2023**
(21) Application number: 23155293.6
(22) Date of filing: 07.02.2023
(51) Int. Cl.: H02K 15/095, H01F 41/077

(54) **METHOD FOR SUPPLYING WINDING WIRE AND WINDING WIRE SUPPLY DEVICE**

(30) Priority: 11.03.2022 JP 2022038052
(71) Applicant: Mitsuba Corporation, Kiryu-shi, Gunma 376-8555 (JP)
(72) Inventor: OHKAWARA, Tomoki, Kiryu-shi, Gunma 376-8555 (JP); ISHIDA, Takahito, Kiryu-shi, Gunma 376-8555 (JP); FUKUSHIMA, Yusuke, Kiryu-shi, Gunma 376-8555 (JP); SUGIYAMA, Masayuki, Kiryu-shi, Gunma 376-8555 (JP)
(74) Representative: Kurig, Thomas

(57) **Abstract**

The disclosure is a method for supplying a winding wire, including: a first step of compressing the round wire 13 in a width direction thereof downstream from the winding reel 31 and upstream from the nozzle 33; a second step of compressing the round wire 13 in a thickness direction intersecting the width direction after the first step; and a third step of supplying the rectangular wire 11 formed in the second step from the nozzle 33 to the tooth part 9 of the split core 7 such that a width direction of the rectangular wire 11 is oriented in an axial direction of the tooth part of the split core 7, and a thickness direction of the rectangular wire 11 is oriented in a radial direction of the tooth part of the split core 7.

## Description

### BACKGROUND

### Technical Field

The disclosure relates to a method for supplying a winding wire and a winding wire supply device.

### Description of Related Art

In general, in a brushless motor or the like, which is configured of a rotor provided with magnets and a stator in which winding wires are wound, a higher density (space factor) of the winding wires wound around teeth of its stator can improve its performance. Here, in order to increase the space factor, winding wires configured of so-called rectangular wires having substantially rectangular cross-sections may be used. Since the rectangular wires can reduce gaps between the winding wires inside the stator as compared to round wires due to their shape characteristics, the space factor can be further improved.

For example, Patent Document 1 discloses a winding wire structure of a rectangular wire. In the winding wire structure of the rectangular wire, a flatness rate, which is a ratio of a width dimension (a dimension measured in a direction in which rectangular wires are adjacent in the same layer) to a thickness dimension (a dimension measured in a stacking direction thereof) in a cross-sectional shape of the rectangular wire, is changed by a rectangular wire forming device provided upstream from a winder and is increased from an inner layer toward an outer layer of a coil. The rectangular wire forming device includes a winding reel around which a round wire having a circular cross-section is wound, and a first roller, a second roller, and a third roller for forming the rectangular wire. The first roller is for crushing the round wire in a vertical direction (a thickness direction of the rectangular wire), and a pair of upper and lower rollers are rotatably provided therein. The second roller is for crushing the round wire in a lateral direction (a width direction of the rectangular wire), and a pair of left and right rollers are rotatably provided therein. The third roller is for crushing the round wire again in the vertical direction (thickness direction of the rectangular wire), and a pair of upper and lower rollers are rotatably provided therein. The pair of upper and lower rollers of the third roller are provided to be slidable in the vertical direction, so that a distance between the rollers can be appropriately set on the basis of a signal from a control unit. First, the round wire pulled out from the winding reel is crushed in the vertical direction by passing through the first roller. Next, by passing through the second roller, it is crushed in the lateral direction to form a temporary rectangular wire having a substantially square cross-section with the smallest flatness rate. After that, the temporary rectangular wire is crushed to a predetermined thickness by the third roller and the temporary rectangular wire is formed into the rectangular wire having a predetermined flatness rate.

### Patent Documents

[Patent Document 1] Japanese Patent Laid-Open No. 2013-99084

### SUMMARY

In the rectangular wire forming device described in Patent Document 1, since the round wire is deformed into the temporary rectangular wire having a substantially square cross-section and then deformed into the temporary rectangular wire having a desired flatness rate, rollers are required at three locations, and thus a supply device of the rectangular wire may become large. If rollers are provided at two locations in order to inhibit enlargement of the supply device of the rectangular wire, when a winding wire crushed by upstream rollers is crushed by downstream rollers, the winding wire may twist (tilt) between the downstream rollers depending on an amount of crushing of the winding wire in the upstream rollers, and thus formation of the rectangular wire may become difficult. In addition, if a configuration for preventing twisting of the winding wire between the downstream rollers is provided, its structure may become complicated.

Thus, an object of the disclosure is to provide a method for supplying a winding wire and a winding wire supply device in which a rectangular wire can be formed from a round wire with a simple configuration and can be supplied to a winding target.

In order to solve the above problems, a first aspect of the disclosure is a method for supplying a winding wire in which a round wire sent from a wire supply source is deformed into a rectangular wire and then the rectangular wire is supplied from a winding wire supply member to a winding target, including: a first step of compressing the round wire in a width direction thereof downstream from the wire supply source and upstream from the winding wire supply member; a second step of compressing the round wire in a thickness direction intersecting the width direction after the first step downstream from the wire supply source and upstream from the winding wire supply member to form the rectangular wire such that its length in the thickness direction is equal to or less than its length in the width direction; and a third step of supplying the rectangular wire formed in the second step from the winding wire supply member to the winding target such that a width direction of the rectangular wire is oriented in an axial direction of the winding target, and a thickness direction of the rectangular wire is oriented in a radial direction of the winding target.

A second aspect of the disclosure is the method for supplying a winding wire according to the first aspect, wherein the length of the rectangular wire in the width direction, which is formed in the second step, is at least 25/31 and at most 35/31 of a diameter of the round wire.

A third aspect of the disclosure is a winding wire supply device including: a rectangular wire former that includes a pair of first rollers, which compress a round wire sent from a wire supply source from both sides in a width direction thereof, and a pair of second rollers, which are disposed downstream from the pair of first rollers and compress the round wire sent from the pair of first rollers in a thickness direction intersecting the width direction, and that forms a rectangular wire such that a length in a thickness direction thereof is equal to or less than a length in a width direction thereof; and a winding wire supply member that is disposed downstream from the rectangular wire former and supplies the rectangular wire formed by the rectangular wire former to a winding target side such that the width direction of the rectangular wire is oriented in an axial direction of a winding target and the thickness direction of the rectangular wire is oriented in a radial direction of the winding target.

A fourth aspect of the disclosure is a winding wire supply device according to the third aspect, wherein the rectangular wire former forms the rectangular wire such that the length of the rectangular wire in the width direction is at least 25/31 and at most 35/31 of a diameter of the round wire.

According to the disclosure, the rectangular wire can be formed from the round wire with a simple configuration and can be supplied to the winding target.

### BRIEF DESCRIPTION OF THE DRAWINGS

FIG. 1 is a perspective view of a motor having split cores.
FIG. 2 is a side view of the split cores and coils.
FIG. 3 is a cross-sectional view along line III-III in FIG. 2.
FIG. 4 is a schematic diagram of a winding device including a winding wire supply device according to an embodiment of the disclosure.
FIG. 5 is a perspective view of a rectangular wire former.
FIG. 6 is an explanatory view showing a forming process of a rectangular wire.
FIG. 7 is a graph showing a forming range of the rectangular wire.

### DESCRIPTION OF THE EMBODIMENTS

An embodiment of the disclosure will be described below on the basis of the drawings. In each figure, W indicates a width direction of a rectangular wire, T indicates a thickness direction of the rectangular wire, A indicates an axial direction of a coil, and R indicates a radial direction of the coil.

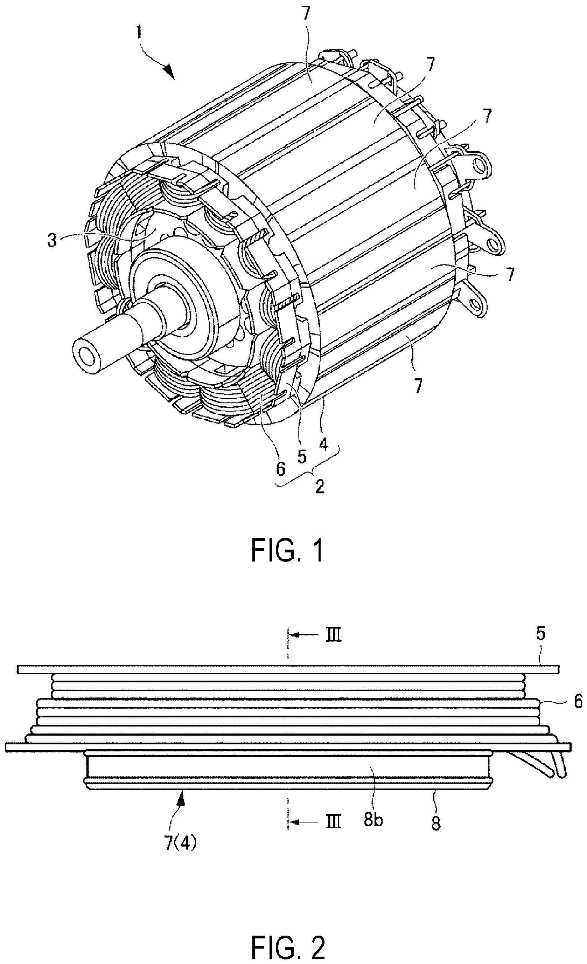

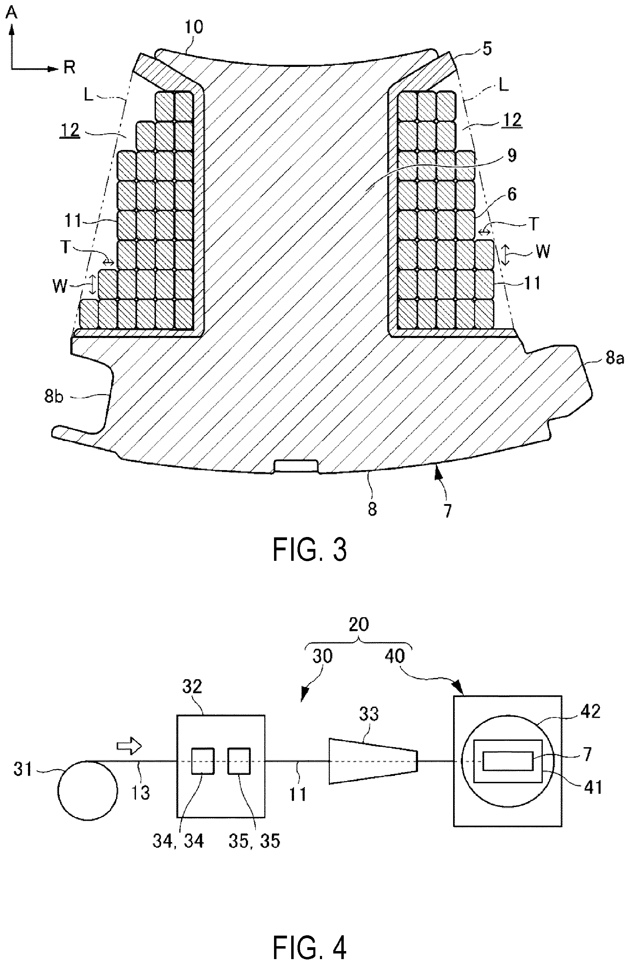

FIG. 1 is a perspective view of a motor 1 having split cores 7. FIG. 2 is a side view of the split cores 7 and coils 6. FIG. 3 is a cross-sectional view along line III-III in FIG. 2.

As shown in FIG. 1, a method for supplying a winding wire and a winding wire supply device according to the disclosure are applied, for example, to a method for supplying a winding wire and a winding wire supply device in the case of manufacturing a stator 2 of a brushless motor 1 (rotary electric machine). The brushless motor 1 (hereinafter referred to as the "motor 1") has a stator 2 press-fitted into a housing (not shown), and a rotor 3 that is disposed inward from the stator 2 in a motor radial direction and provided rotatably with respect to the stator 2.

The stator 2 includes a stator core 4, an insulating insulator 5 attached to the stator core 4, and a coil 6. The stator core 4 of the present embodiment is a split-core type stator core 4 that is split in a motor circumferential direction and is formed by connecting a plurality of split cores 7 in an annular shape in the motor circumferential direction.

As shown in FIGS. 2 and 3, each of the split cores 7 of the stator core 4 includes a yoke part 8 that has a substantially arcuate cross-section extending in the motor circumferential direction on an outer side in the motor radial direction, a tooth part (to be wound) 9 extending inward from the yoke part 8 in the motor radial direction, and a flange part 10 extending from inner end parts of the tooth part 9 in the motor radial direction toward both sides in the motor circumferential direction. In the present embodiment, the split core 7 is formed, for example, by laminating a plurality of metal plates in a motor axis direction and extends linearly in the motor axis direction. In a state in which the stator core 4 is formed by connecting the plurality of split cores 7 in an annular shape in the motor circumferential direction, the yoke part 8 constitutes a substantially cylindrical back yoke serving as an annular magnetic path. The coil 6 of the present embodiment is formed by winding a rectangular wire 11 serving as a winding wire around the tooth part 9. Also, the split core 7 may have a skew angle that is inclined with respect to a length direction (motor axis direction) of the split core 7. In addition, in the present embodiment, the tooth part 9 of the split core 7 of the stator core 4 is exemplified as a winding target, but a winding target is arbitrary and it can be applied to an armature core or the like. Further, the disclosure is also applicable to the case of winding a coil around a non-magnetic material, and a function and a use of the coil are also arbitrary.

Connecting parts 8a and 8b for connecting adjacent split cores 7 to each other are formed at both end parts of the yoke part 8 in the motor circumferential direction. One connecting part 8a extends in the motor axis direction in a state in which it protrudes outward in the motor circumferential direction. The other connecting part 8b is formed in a groove shape, which extends in the motor axis direction while being recessed inward in the motor circumferential direction, and is engageable with the one connecting part 8a. By engaging the connecting parts 8a and 8b at both end parts of the yoke part 8 in the motor circumferential direction with the connecting parts 8b and 8a of the yoke parts 8 of other split cores 7 adjacent thereto at both sides in the motor circumferential direction, the plurality of split cores 7 can be connected to each other to form the stator core 4. The tooth part 9 extends in the motor axis direction in a state in which it protrudes inward in the motor radial direction (toward a rotation center of the motor 1) from an intermediate part (substantially a center in the present embodiment) of an inner circumferential surface of the yoke part 8 in the motor circumferential direction. The flange part 10 extends in the motor axis direction in a state in which it protrudes from the inner end parts of the tooth part 9 in the motor radial direction toward both sides in the motor circumferential direction.

A pair of slots 12 for winding the winding wire (rectangular wire 11) forming the coil 6 are defined by the yoke part 8, the tooth part 9, and the flange part 10 on both sides of the tooth part 9 in the motor circumferential direction. That is, parts located inward from virtual lines (two-dot chain lines L in FIG. 3) that connect the end parts of the yoke part 8 in the motor circumferential direction to the end parts of the flange part 10 in the motor circumferential direction serve as the slots 12. In addition, an axial direction A of the tooth part 9 (an axial direction A of the winding target) is a direction serving as the axial direction of the coil 6 wound around the tooth part 9. Also, a radial direction R of the tooth part 9 (a radial direction R of the winding target) is a direction serving as the radial direction of the coil 6 wound around the tooth part 9.

The insulator 5 is attached to the split core 7 to cover a circumference of the tooth part 9. The insulator 5 covers parts of the split core 7 that face the slots 12 and also covers end parts of the tooth part 9 on both sides in the motor axis direction.

FIG. 4 is a schematic diagram of a winding device 20 including a winding wire supply device 30 according to an embodiment of the disclosure.

As shown in FIG. 4, the winding device 20 is a device for forming the coil 6 by winding the rectangular wire 11 around the tooth part 9 (see FIG. 3) of the split core 7 and includes the winding wire supply device 30 that supplies the winding wire to the tooth part 9 side of the split core 7, which is the winding target, and a winder 40 that winds the rectangular wire 11 supplied from the winding wire supply device 30 side around the tooth part 9 of the split core 7.

The winding wire supply device 30 supplies the rectangular wire 11 serving as the winding wire to the tooth part 9 side of the split core 7, which is the winding target. The winding wire supply device 30 includes a rectangular wire former 32 that deforms a round wire 13 sent from a winding reel (a wire supply source) 31 side (sent in a white arrow direction in FIG. 4) to form the rectangular wire 11, and a nozzle (a winding wire supply member) 33 that supplies the rectangular wire 11 formed by the rectangular wire former 32 to the tooth part 9 side of the split core 7 on the winder 40 side.

The round wire 13 is wound in advance on the winding reel 31. In the present embodiment, the round wire 13 having a diameter d of 1.86 mm is wound around the winding reel 31. Also, dimensions of the winding wires (the round wire 13 and the rectangular wire 11) in the disclosure are dimensions including insulating films.

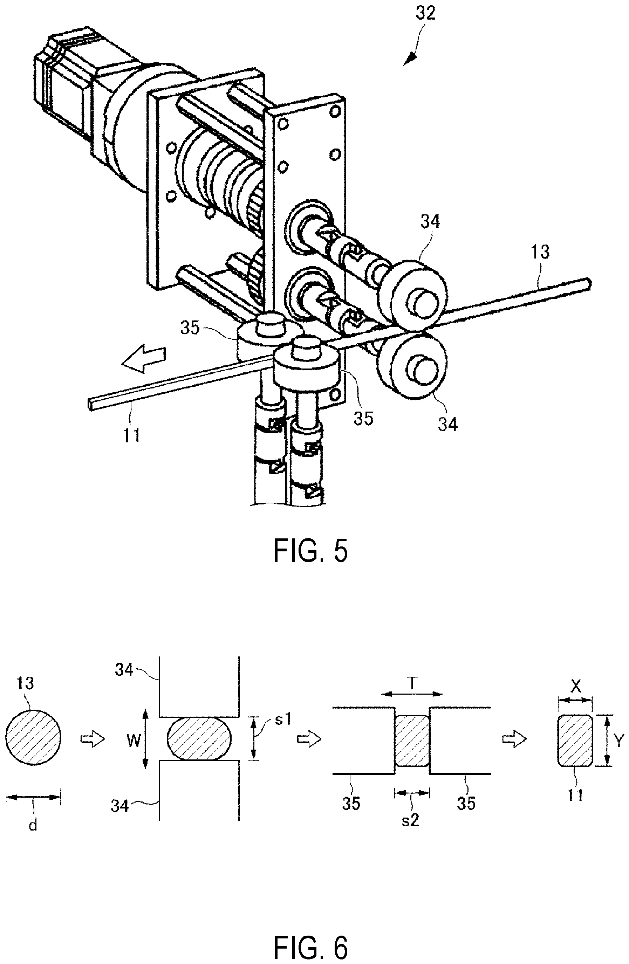

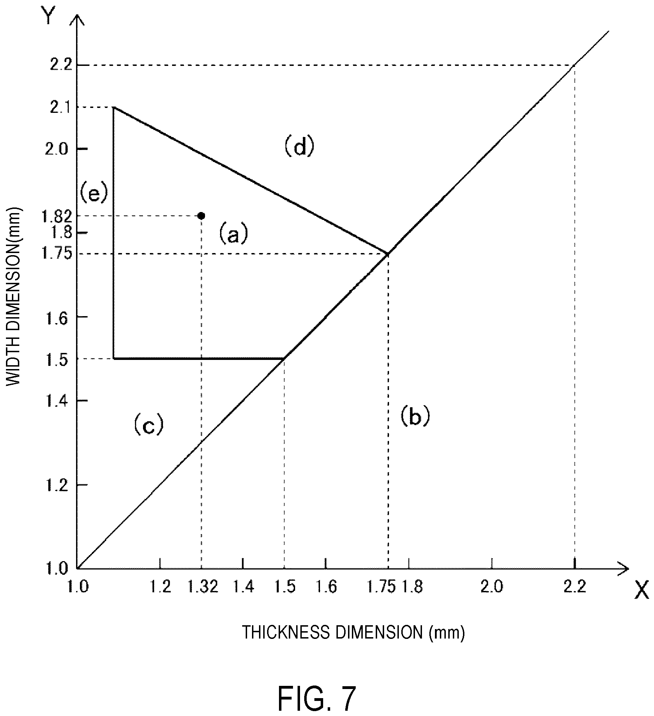

FIG. 5 is a perspective view of the rectangular wire former 32. FIG. 6 is an explanatory view showing a forming process of the rectangular wire 11. FIG. 7 is a graph showing a forming range of the rectangular wire 11. In addition, FIG. 6 shows a state in which the round wire 13 and the rectangular wire 11 serving as the winding wire are viewed in a distributing direction. Also, FIG. 7 shows the forming range of the rectangular wire 11 formed from the round wire 13 having a diameter d of 1.86 mm.

As shown in FIGS. 4 and 5, the rectangular wire former 32 has a pair of first rollers 34 located upstream and a pair of second rollers 35 located downstream. The first rollers 34 apply a compressive force in a width direction W (a vertical direction in FIG. 5) to the round wire 13 sent from the winding reel 31 in the white arrow direction. The second rollers 35 are disposed downstream from the first rollers 34 and apply a compressive force in a thickness direction T (a lateral direction in FIG. 5) to the winding wire that has passed through the first rollers 34. In addition, the width direction W is a direction oriented in the axial direction A of the tooth part 9 (a direction in which rectangular wires 11 in the same layer are adjacent to each other) when the rectangular wire 11 is wound around the tooth part 9 of the split core 7 (see FIG. 3). Also, the thickness direction T is a direction intersecting the width direction W and is a direction oriented in the radial direction R of the tooth part 9 (a laminating direction of the rectangular wire 11) when the rectangular wire 11 is wound around the tooth part 9 of the split core 7.

As shown in FIG. 6, the rectangular wire former 32 forms the rectangular wire 11 such that its length X in the thickness direction T is equal to or less than its length Y in the width direction W. In the present embodiment, the rectangular wire former 32 forms the rectangular wire 11 having a substantially rectangular cross-section in which the length X (1.32 mm) in the thickness direction T is shorter than the length Y (1.82 mm) in the width direction W. The round wire 13 sent from the winding reel 31 is first compressed from both sides in the width direction W by the first rollers 34 and then compressed from both sides in the thickness direction T by the second rollers 35. An interval s1 between the first rollers 34 is set to a minimum interval (an interval shorter than a predetermined target value) required for enabling surfaces of the rectangular wire 11 on both sides in the width direction W to be formed in flat surface shapes and setting the length Y in the width direction W to the predetermined target value (1.82 mm). An interval s2 between the second rollers 35 is set to be substantially the same as a predetermined target value (1.32 mm) of the length X of the rectangular wire 11 in the thickness direction T. The interval s1 between the first rollers 34 and the interval s2 between the second rollers 35 are variably controlled by a driving mechanism (not shown). A cross-sectional shape of the rectangular wire 11 is defined by the interval s1 between the first rollers 34 and the interval s2 between the second rollers 35. In a case in which the interval s1 between the first rollers 34 and the interval s2 between the second rollers 35 are equal to or larger than the diameter d of the round wire 13, the round wire 13 maintains its cross-sectional shape (circular cross-sectional shape) without being deformed by the rectangular wire former 32.

As shown in FIG. 7, the rectangular wire former 32 forms the rectangular wire 11 such that the length X in the thickness direction T (a thickness dimension X) and the length Y in the width direction W (a width dimension Y) of the rectangular wire 11 are within a predetermined range (the range (a) shown in FIG. 7). A range of the length Y in the width direction W in the predetermined range (a) may be a length of at least 25/31 (1.50 mm in the present embodiment) and at most 35/31 (2.10 mm in the present embodiment) with respect to the diameter d (1.86 mm in the present embodiment) of the round wire 13. That is, the length Y of the rectangular wire 11 in the width direction W formed by the rectangular wire former 32 may be at least 25/31 and at most 35/31 of the diameter d of the round wire 13.

In the rectangular wire 11 in a range in which the length X of the rectangular wire 11 in the thickness direction T is longer than the length Y in the width direction W (the range (b) shown in FIG. 7), a ratio between the length X of the rectangular wire 11 in the thickness direction T and the length Y of the rectangular wire 11 in the width direction W is reversed. For this reason, when the rectangular wire 11 is wound around the tooth part 9 of the split core 7, the rectangular wire 11 is less likely to stabilize and tends to tilt, and thus a stable winding cannot be performed. In addition, when the length Y of the rectangular wire 11 in the width direction W is shorter than a length of 25/31 of the diameter of the round wire 13 (the range (c) shown in FIG. 7), the round wire 13 is greatly elongated in the thickness direction T due to the compression by the first rollers 34. For this reason, when an elliptical round wire 13 that is greatly elongated in the thickness direction T due to the compression by the first rollers 34 is compressed by the second rollers 35, it is twisted (tilted) between the second rollers 35, which makes it difficult to form the rectangular wire 11. Further, when the length Y of the rectangular wire 11 in the width direction W is too long (the range (d) shown in FIG. 7), the surfaces of the rectangular wire 11 on both sides in the width direction W become curved surfaces and their cross-sectional shapes become elliptical or round, and thus the rectangular wire 11 having a substantially rectangular cross-section cannot be formed. In addition, the length X of the rectangular wire 11 in the thickness direction T has a range in which it cannot be shortened (thinned) any more due to, for example, equipment limitations (the range (e) shown in FIG. 7). For this reason, it is difficult to make the length Y of the rectangular wire 11 in the width direction W longer than 35/31 of the diameter of the round wire 13.

As shown in FIG. 4, a nozzle 33 is disposed downstream from the rectangular wire former 32 and supplies the rectangular wire 11 to the tooth part 9 side of the split core 7 supported by a core support part 41 of the winder 40, which will be described later. The nozzle 33 supplies the rectangular wire 11 formed by the rectangular wire former 32 to the tooth part 9 side of the split core 7 in the winder 40 such that the width direction W of the rectangular wire 11 is oriented in the axial direction A of the tooth part 9 (the axial direction A of the winding target) and the thickness direction T of the rectangular wire 11 is oriented in the radial direction R of the tooth part 9 (the radial direction R of the winding target) (see FIG. 3).

The winder 40 is disposed downstream from the nozzle 33 of the winding wire supply device 30. The winder 40 includes the core support part 41 that can support the split core 7, and a rotating mechanism 42 that rotates the core support part 41 around a rotation axis oriented in the axial direction A of the tooth part 9 of the split core 7. By rotating the split core 7 with the rotating mechanism 42 of the winder 40, the rectangular wire 11 is pulled out from the nozzle 33 and wound around the tooth part 9 of the split core 7. Also, the winder 40 may include a guide member (not shown) that guides the rectangular wire 11 to a predetermined position on the tooth part 9 of the split core 7.

Next, a method for supplying the winding wire according to an embodiment of the disclosure will be described.

The method for supplying the winding wire according to the present embodiment is a supply method in which the round wire 13 sent from the winding reel 31 is deformed into the rectangular wire 11 and then the rectangular wire 11 is supplied from the nozzle 33 to the tooth part 9 side of the split core 7 serving as the winding target, and which includes a first step, a second step, and a third step.

In the first step, the round wire 13 is compressed in the width direction W downstream from the winding reel 31 and upstream from the nozzle 33. Specifically, the round wire 13 sent from the winding reel 31 is compressed in the width direction W by the first rollers 34 of the rectangular wire former 32 disposed downstream from the winding reel 31 and upstream from the nozzle 33.

In the second step, the round wire 13 is compressed in the thickness direction T intersecting the width direction W downstream from the winding reel 31 and upstream from the nozzle 33 after the first step to form the rectangular wire 11 such that the length X in the thickness direction T is equal to or less than the length Y in the width direction W. Specifically, the round wire 13 passing through the first rollers 34 is compressed in the width direction W by the second rollers 35 of the rectangular wire former 32 to form the rectangular wire 11 such that the length X in the thickness direction T is equal to or less than the length Y in the width direction W. The length Y in the width direction W of the rectangular wire 11 formed in the second step may be a length of at least 25/31 (1.50 mm in the present embodiment) and at most 35/31 (2.10 mm in the present embodiment) of the diameter d (1.86 mm in the present embodiment) of the round wire 13.

In the third step, the rectangular wire 11 formed in the second step is supplied from the nozzle 33 to the tooth part 9 side of the split core 7 serving as the winding target such that the width direction W of the rectangular wire 11 is oriented in the axial direction A of the tooth part 9 (axial direction A of the winding target) and the thickness direction T of the rectangular wire 11 is oriented in the radial direction R of the tooth part 9 (radial direction R of the winding target).

Also, the method for supplying the winding wire may include the above-described first, second, and third steps, and may include other steps in addition to the first, second, and third steps.

In the method for supplying the winding wire and the winding wire supply device 30 configured as described above, the round wire 13 sent from the winding reel 31 is compressed from both sides in the width direction W by the first rollers 34 and is then compressed from both sides in the thickness direction T by the second rollers 35 to form the rectangular wire 11 such that the length X in the thickness direction T is equal to or less than the length Y in the width direction W. In this way, longer sides (sides in the width direction W) of the round wire 13 when formed into the rectangular wire 11 are compressed first, and thus, unlike a case in which shorter sides (sides in the thickness direction T) thereof are compressed first, a length in a longitudinal direction of the round wire 13 having a substantially elliptical cross-section after compression can be inhibited. Thus, when it is next compressed by the second rollers 35, twist (tilt) of the round wire 13 having a substantially elliptical cross-section between the second rollers 35 can be prevented. For this reason, since the rectangular wire 11 can be formed from the round wire 13 with the rollers at two locations (the first rollers 34 and the second rollers 35) without providing rollers at three or more locations, the configuration can be made compact.

Also, the rectangular wire former 32 may form the rectangular wire 11 such that the length Y of the rectangular wire 11 in the width direction W is at least 25/31 and at most 35/31 of the diameter of the round wire 13. In this way, by setting the length Y of the rectangular wire 11 in the width direction W to the length of at least 25/31 of the diameter of the round wire 13, the length in the longitudinal direction of the round wire 13 having a substantially elliptical cross-section after the round wire 13 is compressed in the width direction W can be inhibited, and when the round wire 13 is next compressed by the second rollers 35, twist (tilt) of the round wire 13 having a substantially elliptical cross-section between the second rollers 35 can be prevented. Further, by setting the length Y of the rectangular wire 11 in the width direction W to be at most 35/31 of the diameter of the round wire 13, the length X of the rectangular wire 11 in the thickness direction T can be prevented from becoming too small, and thus the rectangular wire 11 can be easily formed within a range in which the length X in the thickness direction T can be formed.

Further, the rectangular wire 11 formed by the rectangular wire former 32 is supplied from the nozzle 33 to the tooth part 9 side of the split core 7 such that the width direction W of the rectangular wire 11 is oriented in the axial direction A of the tooth part 9 (axial direction A of the winding target) and the thickness direction T of the rectangular wire 11 is oriented in the radial direction R of the tooth part 9 (radial direction R of the winding target). Thus, the rectangular wire 11 can be wound around the tooth part 9 in a state in which a surface of the rectangular wire 11 extending in the longitudinal direction in its cross-section is caused to abut the insulator 5 of the tooth part 9 inward in the radial direction or the rectangular wire 11 in an inner layer in the radial direction. For this reason, unlike a case in which a surface of the rectangular wire 11 extending in a lateral direction in its cross-section is caused to abut the inner side in the radial direction, tilt of the rectangular wire 11 can be inhibited when the rectangular wire 11 is wound around the tooth part 9, and the rectangular wire 11 can be stably wound around the tooth part 9.

As described above, according to the present embodiment, with a simple configuration in which the rollers are provided at two locations (the first rollers 34 and the second rollers 35) and the longer sides (sides in the width direction W) when the rectangular wire 11 is formed are compressed first, the rectangular wire 11 can be formed from the round wire 13, and can be supplied to the tooth part 9 side of the split core 7 serving as the winding target.

### [Reference Signs List]

7 Split core
9 Tooth part (winding target)
11 Rectangular wire
13 Round wire
30 Winding wire supply device
31 Winding reel (wire supply source)
32 Rectangular wire former
33 Nozzle (winding wire supply member)
34 Pair of first rollers
35 Pair of second rollers

## Claims

1. A method for supplying a winding wire, in which a round wire (13) sent from a wire supply source (31) is deformed into a rectangular wire (11) and then the rectangular wire (11) is supplied from a winding wire supply member (33) to a winding target (9), comprising:
a first step of compressing the round wire (13) in a width direction of the round wire (13) downstream from the wire supply source (31) and upstream from the winding wire supply member (33);
a second step of compressing the round wire (11) in a thickness direction intersecting the width direction after the first step downstream from the wire supply source (31) and upstream from the winding wire supply member (33) to form the rectangular wire (11) such that a length in the thickness direction is equal to or less than a length in the width direction; and
a third step of supplying the rectangular wire (11) formed in the second step from the winding wire supply member (33) to the winding target (9) such that the width direction of the rectangular wire (11) is oriented along an axial direction of the winding target (9), and the thickness direction of the rectangular wire (11) is oriented along a radial direction of the winding target (9).

2. The method for supplying a winding wire according to claim 1, wherein the length of the rectangular wire (11) in the width direction, which is formed in the second step, is at least 25/31 and at most 35/31 of a diameter of the round wire (13).

3. A winding wire supply device (30), comprising:
a rectangular wire former (32) that includes a pair of first rollers (34) and a pair of second rollers (35), wherein the pair of first rollers (34) compress a round wire (13) sent from a wire supply source (31) from both sides in a width direction of the round wire (13), the pair of second rollers (35) are disposed downstream from the pair of first rollers (34) and compress the round wire (13) sent from the pair of first rollers (34) in a thickness direction intersecting the width direction, the rectangular wire (11) former forms a rectangular wire (11) such that a length in a thickness direction of the rectangular wire (11) is equal to or less than a length in a width direction of the rectangular wire (11); and
a winding wire supply member (33) that is disposed downstream from the rectangular wire former (32) and supplies the rectangular wire (11) formed by the rectangular wire former (32) to a winding target side (9) such that the width direction of the rectangular wire (11) is oriented along an axial direction of the winding target (9) and the thickness direction of the rectangular wire (11) is oriented along a radial direction of the winding target.

4. The winding wire supply device (30) according to claim 3, wherein the rectangular wire former (32) forms the rectangular wire (11) such that the length of the rectangular wire (11) in the width direction is at least 25/31 and at most 35/31 of a diameter of the round wire (13).
